# FASCICULE DE BREVET EUROPEEN

(11) **EP 4 118 276 B1**
(45) Date de publication et mention de la délivrance du brevet: **10.09.2025**
(21) Numéro de dépôt: 21716496.1
(22) Date de dépôt: 12.03.2021
(51) Int. Cl.: E04B 1/74, F24S 10/40, F24S 20/61, F24S 20/66

(54) **MUR TROMBE PRESENTANT UNE PAROI DE STOCKAGE THERMIQUE ET UNE COUVERTURE TRANSPARENTE**
TROMBENWAND, DIE EINE WÄRMESPEICHERWAND UND EINE TRANSPARENTE ABDECKUNG UMFASST
TROMBE WALL COMPRISING A THERMAL STORAGE WALL AND A TRANSPARENT COVERING

(30) Priorité: 12.03.2020 FR 2002474
(43) Date de publication de la demande: 18.01.2023
(73) Titulaire: Université de La Réunion, 97744 Saint Denis Cedex 9 (FR)
(72) Inventeur: BASTIDE, Alain, 97432 La Ravine Des Cabris (FR); RAMALINGOM, Delphine, 97400 Saint-Denis (FR); COCQUET, Pierre-Henri, 64000 Pau (FR)
(74) Mandataire: IP Trust
(86) Numéro de dépôt international: PCT/FR2021/050423
(87) Numéro de publication internationale: WO 2021/181054

(56) Documents cités:
- US-A- 4 216 765

## Description

### Domaine de l'invention

La présente invention concerne le domaine de l'architecture bioclimatique et plus particulièrement de la thermorégulation passive des bâtiments utilisant le principe du « mur Trombe ». Un mur Trombe est composé d'un vitrage extérieur placé devant un mur sombre pour provoquer un effet de serre qui chauffe la lame d'air située entre les deux éléments. Des ouvertures en parties basses et hautes du mur assurent ensuite, à la demande, une circulation d'air par thermosiphon entre la lame d'air et l'intérieur des locaux à chauffer. En régulant le système, les calories sont stockées dans le mur et restituées de façon déphasée dans le bâtiment. L'air chauffé dans la lame d'air pénètre par les ouvertures supérieures dans les locaux. En chauffant la pièce, il se refroidit au contact de l'air du local et, une fois rafraîchi, revient par les ouvertures inférieures dans la lame d'air pour se réchauffer à nouveau. Les deux tiers environ de l'énergie sont restitués en transmission directe. Le tiers restant est, lui, restitué en déphasé grâce à l'inertie du mur.

En l'absence de rayonnement solaire, le flux convectif s'inverse, ce qui peut provoquer un refroidissement accéléré de la pièce. Des clapets à fermeture manuelle ou automatique sont disposés au niveau des ouvertures. Ces clapets contrôlant le passage d'air par les ouvertures permettent d'éviter le refroidissement du local en l'absence d'ensoleillement suffisant et/ou d'assurer un refroidissement du local pendant les périodes de grandes chaleurs.

### État de la technique

Le mur Trombe (ou encore Trombe-Michel) a été imaginé par Edward Morse en 1881 et décrit dans le brevet américain US246626A.

De nombreuses évolutions ont été proposées, comme par exemple : les murs intégrant un matériau à changement de phase (MCP), les murs en zigzag, les murs à eau, les murs hybrides, les murs trans-solaires, les murs composites, les murs fluidisés, les murs avec photovoltaïque, les murs avec un système d'air forcé,etc..

On connaît aussi le brevet US4216765 qui décrit un collecteur de chaleur solaire transparent utilisant le rayonnement solaire pour chauffer et éclairer une structure de bâtiment, le collecteur de chaleur solaire comprenant un verre de convertisseur transparent absorbant au moins environ 90% du rayonnement infrarouge dans le spectre de rayonnement solaire incident sur le verre pour la conversion du rayonnement infrarouge en énergie thermique, des moyens de support portant le verre de convertisseur transparent pour l'exposition au rayonnement solaire et la transmission de la lumière dans la structure du bâtiment, et des moyens pour faire passer un liquide transparent en transfert de chaleur contact avec le verre transparent du convertisseur pour transporter l'énergie thermique du verre dans la structure du bâtiment.

### Inconvénients de l'art antérieur

Les solutions de l'art antérieur présentent un comportement aéraulique qui peut être amélioré comme le montre les thèses portant sur l'étude de la convection entre les parois d'un mur Trombe. Le profil de vitesse et de température varie dans l'épaisseur du canal vertical formé entre les deux parois, ce qui conduit à des disparités entre les échanges entre l'air circulant et le mur capteur.

### Solution apportée par l'invention

Afin de remédier à cet inconvénient, la présente invention concerne selon son acception la plus générale un mur trombe présentant une paroi de stockage thermique et une couverture transparente définissant entre elles un espace de circulation d'air et d'échange thermique, ledit espace présentant dans sa partie basse une ouverture débouchant à l'intérieur du bâtiment et dans sa zone haute une ouverture débouchant à l'intérieur du bâtiment caractérisé en ce que la surface de ladite paroi de stockage thermique faisant face à ladite couverture transparente présente au moins un moyen de perturbation de la couche limite aéraulique constitué par une des trois alternatives ci-après.

On entend par « couche limite aéraulique» la zone d'interface entre un corps et le l'air circulant lors d'un mouvement relatif entre les deux.

Lorsqu'un fluide réel, en l'occurrence de l'air, s'écoule le long d'une paroi d'un corps fixe, en l'occurrence la paroi de stockage, les vitesses sur la paroi sont nulles alors qu'à l'infini (c'est-à-dire loin de la paroi) elles sont égales à la vitesse de l'écoulement. Sur une normale à la paroi, la vitesse doit donc dans tous les cas varier entre 0 et un maximum. La loi de variation dépend de la viscosité du fluide qui induit un frottement entre les couches voisines : si l'on considère deux couches successives, la couche la plus lente tend à freiner la couche la plus rapide qui, en retour, tend à l'accélérer.

Avantageusement, ladite paroi de stockage thermique faisant face à ladite couverture transparente présente une pluralité de moyens de perturbation de la couche limite aéraulique répartis latéralement et verticalement.

Selon la première alternative, ledit ou lesdits moyens de perturbation de la couche limite aéraulique sont constitués par des rouleaux transversaux motorisés affleurant à la surface de ladite paroi de stockage thermique d'une épaisseur comprise entre 10 et 100 millimètres.

Avantageusement, ledit ou lesdits moyens de perturbation de la couche limite aéraulique sont constitués par des rouleaux transversaux motorisés affleurant à la surface de ladite paroi de stockage thermique d'une épaisseur correspondant à 0,2 à 2 fois l'épaisseur de ladite couche limite.

Selon une première variante, lesdits rouleaux sont lisses.

Selon une deuxième variante, lesdits rouleaux présentent des nervures longitudinales. Ces nervures longitudinales s'étendent dans des plans radiaux, ou présentent des ondulations ou au moins un tortillon.

Selon la seconde alternative, ledit ou lesdits moyens de perturbation de la couche limite aéraulique sont constitués par des protubérances d'une épaisseur comprise entre 10 et 100 millimètres réparties sur la surface de ladite paroi de stockage thermique.

Selon la troisième alternative, ledit ou lesdits moyens de perturbation de la couche limite aéraulique sont constitués par des surfaces vibrantes.

Avantageusement, ledit ou lesdits moyens de perturbation de la couche limite aéraulique sont constitués par des électrodes formant un système de décharge à barrière diélectrique.

Avantageusement, ladite ou lesdites électrodes sont constitués par deux lames conductrices planes adjacentes et disposées de part et d'autre d'un film isolant.

### Description détaillée d'exemple non limitatifs de réalisation

L'invention sera mieux comprise et d'autres avantages de celle-ci apparaîtront mieux à la lumière de la description qui va suivre d'exemples de réalisation de mur Trombe selon l'invention donnée uniquement à titre d'exemple, et faite en référence aux dessins annexés dans lesquels :
[Fig.1] la figure 1 représente une vue en coupe d'un premier exemple de réalisation de l'invention ;
[Fig.2] la figure 2 représente une vue en coupe d'un deuxième exemple de réalisation de l'invention.

### Principe général

L'invention est basée sur la perturbation du flux aéraulique à la surface de ladite paroi de stockage thermique faisant face à ladite couverture transparente présente au moins un moyen de perturbation de la couche limite aéraulique. La perturbation de la couche limite thermique et aéraulique peut être obtenue en modifiant la vitesse du fluide au niveau de la paroi et/ou au sein même de la couche limite. Par expérience, l'intensité de cette vitesse doit être supérieure à la vitesse de convection définie par le rapport entre la diffusivité thermique et une longueur caractéristique de la conduite, Une augmentation de la vitesse du fluide proche de la paroi ou au sein de la couche limite conduit à une modification des transferts thermiques entre le mur capteur et l'air circulan. Ainsi, un rouleau en rotation, un ruban roulant ou un système de décharges à barrière diélectrique sont des moyens qui génèrent une vitesse au niveau de la paroi, et a fortiori, au niveau de la couche limite.

Ceci est obtenu par un « moyen de perturbation », formulation générique et fonctionnel qui sera déclinée en différents exemple de réalisation structurels. Ce « moyen de perturbation de la couche limite thermique et aéraulique » détermine la fonction que doit remplir le moyen prévu à la surface de la paroi opaque, en l'occurrence créer une perturbation de la couche limite, en modifiant ainsi un écoulement laminaire. La paroi opaque du Mur Trombe est généralement plane et présente une surface lisse.

### Présentation d'un premier mode de réalisation

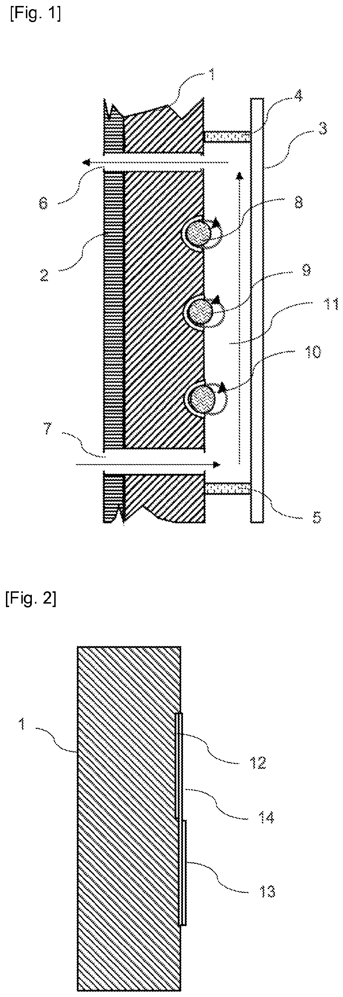

**La** **figure 1** **représente une première version d'un mur Trombe selon l'invention. Il est constitué par un mur formé par une paroi (1) de stockage thermique, par exemple un mur de béton d'une épaisseur de 40 centimètres ou un mur de parpaing, ou d'une paroi de 45 centimètres en terre banchée. La face arrière (à l'intérieur du bâtiment) est recouverte par un isolant (2). Il comprend une paroi transparente (3), par exemple une feuille de polycarbonate ou un vitrage définissant une lame d'air (11) fermée par des traverses (4, 5) assurant la fixation de la vitre (3) sur la paroi (1).**

Optionnellement, la paroi (1) de stockage thermique peut renfermer un matériau à changement de phase augmentant la capacité de stockage thermique.

Elle est traversée par une série d'évents (7) alignés dans la partie basse de la paroi (1), et une série d'évents (6) alignés dans la partie haute de la paroi (1). Ces évents (6, 7) débouchent respectivement près du sol et près du plafond de l'intérieur du bâtiment. L'air circule par convection entre la partie inférieure et la partie supérieure de l'espace formé entre la paroi (1) et la vitre (3), pour se réchauffer au contact de la paroi (1) et déboucher dans le bâtiment par les évents supérieurs (6). L'air se refroidit dans le bâtiment et l'air froid est évacué par les évents (7) de la partie inférieure pour revenir dans l'espace formé entre la paroi (1) et la vitre (3).

Éventuellement, des volets commandent l'ouverture ou la fermeture des évents inférieurs (7) et/ou supérieurs (6).

Selon une variante, des évents sont également prévus pour communiquer avec l'extérieur du bâtiment. De la même façon, des volets peuvent commander l'ouverture ou la fermeture des évents de communication avec l'extérieur du bâtiment.

Dans la version illustrée par la figure 1, la paroi (1) intègre des rouleaux transversaux (8, 9, 10) s'étendant sur la largeur de la paroi (1). Ils sont intégrés dans des rainures formées dans la paroi (1) et dépassent de la surface extérieure de la paroi (1), orientée vers le vitrage (3), de quelques dizaines de millimètres, typiquement de 10 à 100 millimètres. Ces rouleaux transversaux (8, 9, 10) sont entraînés par des moteurs électriques et présentent une surface lisse ou revêtue de nervures ou de filets ondulés.

Selon une variante particulière, les rouleaux transversaux (8, 9, 10) forment le rotor d'un moteur électrique comprenant en outre un stator bobiné fixe. Les rouleaux transversaux (8, 9, 10) sont formés dans ce cas en un matériau ferromagnétique constituant une culasse contre laquelle sont collées des aimants permanents.

Ces rouleaux transversaux (8, 9, 10) ont pour effet de perturber la couche limite du flux aéraulique se formant à la surface de la paroi (1) en créant des turbulences assurant un brassage de la lame d'air circulant entre le vitrage (3) et la paroi de stockage thermique (1), de façon à augmenter les échanges thermiques pendant la circulation entre la zone basse et la zone haute du mur Trombe.

### Variante de réalisation

La figure 2 représente une variante de réalisation de l'invention, où la perturbation de la couche limite est produite par un système de décharge à barrière diélectrique. A cet effet, la paroi (1) présente à sa surface, régulièrement répartis, des électrodes formées de deux lames conductrices (12, 13) adjacentes, séparées par un film diélectrique (14). L'une des électrodes (12) est placée sur le film diélectrique (14) et est décalée latéralement par rapport à l'autre électrode (13) disposée sur la face opposée du film diélectrique (14).

Les lames conductrices (12, 13) sont alimentées par des décharges avec une tension alternative de 3 à 10 kV d'une fréquence de quelques Khz. Lorsque la tension appliquée sur le gap gazeux devient égale à la tension d'amorçage (définie par la courbe de Paschen), on observe la formation d'un canal conducteur. Compte tenu du faible libre parcours moyen à pression atmosphérique, ce canal de micro-décharge présente un rayon typiquement de l'ordre de la centaine de µm.

Le diélectrique en vis-à-vis de la micro-décharge se comporte alors comme l'isolant d'un condensateur dont les armatures sont constituées par les lames conductrices (12, 13). Le passage du courant induit une accumulation de charge sur la surface du diélectrique solide en vis-à-vis du canal de décharge qui conduit à une augmentation de la tension. Si l'augmentation de cette tension au fur et à mesure du développement de la décharge est plus rapide que l'augmentation de la tension appliquée à l'endroit où s'est initiée la micro-décharge, elle entraîne une chute de la tension appliquée sur le gaz, ce qui conduit à l'extinction de la décharge.

Ainsi, la micro-décharge est bloquée bien avant d'avoir atteint un degré d'ionisation suffisant pour transiter en régime d'arc. Si la tension appliquée sur les électrodes continue d'augmenter, des micro-décharges s'initient à de nouvelles positions car la présence de charges résiduelles en surface du diélectrique diminue le champ électrique vu par le gaz aux positions où les micro-décharges se sont déjà développées. A l'inversion de polarité, les charges précédemment déposées sur le diélectrique permettent un claquage du gaz sous un champ électrique plus faible que lors de la première alternance.

La différence de potentiel entre deux lames métalliques (12, 13) pour établir une décharge électrique conduit au régime d'arc, qui est localisé et entraîne une très forte élévation de température produisant temporairement un plasma perturbant la couche limite.

La source d'énergie peut être constituée par des cellules photovoltaïques formant par exemple une bande sur le vitrage (3) et assurant l'alimentation d'un circuit électronique du système de décharge à barrière diélectrique (DBD).

## Revendications

1. Mur trombe présentant une paroi (1) de stockage thermique et une couverture transparente (3) définissant entre elles un espace de circulation d'air et d'échange thermique, ledit espace présentant dans sa partie basse une ouverture (7) débouchant à l'intérieur du bâtiment et dans sa zone haute une ouverture (8) et débouchant à l'intérieur du bâtiment **caractérisé en ce que** la surface de ladite paroi (1) de stockage thermique faisant face à ladite couverture transparente (3) présente au moins un moyen de perturbation de la couche limite thermique et aéraulique constitué par :
- des rouleaux transversaux (8, 9, 10) motorisés affleurant à la surface de ladite paroi (1) de stockage thermique d'une épaisseur comprise entre 10 et 100 millimètres
ou
- par des protubérances d'une épaisseur comprise entre 10 et 100 millimètres réparties sur la surface de ladite paroi de stockage thermique
ou
- par des surfaces vibrantes.

2. Mur trombe selon la revendication 1 **caractérisé en ce que** ladite paroi de stockage thermique (1) faisant face à ladite couverture transparente présente une pluralité de moyens de perturbation de la couche limite aéraulique répartis latéralement et verticalement.

3. Mur trombe selon la revendication 1 **caractérisé en ce que** ledit ou lesdits moyens de perturbation de la couche limite aéraulique sont constitués par des rouleaux (8 à 10) transversaux motorisés affleurant à la surface de ladite paroi de stockage thermique d'une épaisseur correspondant à 0,2 à 2 fois l'épaisseur de ladite couche limite.

4. Mur trombe selon la revendication 3 **caractérisé en ce que** lesdits rouleaux (8 à 10) sont lisses.

5. Mur trombe selon la revendication 4 **caractérisé en ce que** lesdits rouleaux (8 à 10) présentent des nervures longitudinales.

6. Mur trombe selon la revendication 1 **caractérisé en ce que** ledit ou lesdits moyens de perturbation de la couche limite aéraulique sont constitués par des électrodes formant un système de décharge à barrière diélectrique.

7. Mur trombe selon la revendication précédente **caractérisé en ce que** ladite ou lesdites électrodes sont constituées par deux lames (12, 13) conductrices planes adjacentes et disposées de part et d'autre d'un film isolant (14).

## Patentansprüche

1. Trombe-Wand, die eine Wärmespeicherwandung (1) und eine transparente Abdeckung (3) aufweist, die einen Luftzirkulations- und Wärmeaustauschraum dazwischen definieren, wobei der Raum in seinem unteren Teil eine Öffnung (7), die in das Innere des Gebäudes mündet, und in seinem oberen Bereich eine Öffnung (8) aufweist, und die in das Innere des Gebäudes mündet,
**dadurch gekennzeichnet, dass** die Oberfläche der Wärmespeicherwandung (1), die der transparenten Abdeckung (3) zugewandt ist, mindestens ein Mittel zum Stören der Wärme- und Luftgrenzschicht aufweist, die besteht aus:
- motorisierten Querrollen (8, 9, 10), die an der Oberfläche der Wärmespeicherwandung (1) bündig anliegen, mit einer Dicke zwischen 10 und 100 Millimetern
oder
- aus Vorsprüngen mit einer Dicke zwischen 10 und 100 Millimetern, die über die Oberfläche der Wärmespeicherwandung verteilt sind
oder
- aus vibrierenden Oberflächen.

2. Trombe-Wand nach Anspruch 1, **dadurch gekennzeichnet, dass** die Wärmespeicherwandung (1), die der transparenten Abdeckung zugewandt ist, eine Vielzahl von Mitteln zum Stören der Luftgrenzschicht aufweist, die seitlich und vertikal verteilt sind.

3. Trombe-Wand nach Anspruch 1, **dadurch gekennzeichnet, dass** das oder die Mittel zum Stören der Luftgrenzschicht aus motorisierten Querrollen (8 bis 10) bestehen, die mit der Oberfläche der Wärmespeicherwandung bündig anliegen, mit einer Dicke, die dem 0,2- bis 2-fachen der Dicke der Grenzschicht entspricht.

4. Trombe-Wand nach Anspruch 3, **dadurch gekennzeichnet, dass** die Rollen (8 bis 10) glatt sind.

5. Trombe-Wand nach Anspruch 4, **dadurch gekennzeichnet, dass** die Rollen (8 bis 10) Längsrippen aufweisen.

6. Trombe-Wand nach Anspruch 1, **dadurch gekennzeichnet, dass** das oder die Mittel zum Stören der Luftgrenzschicht aus Elektroden, die ein dielektrisches Barriereentladungssystem ausbilden, bestehen.

7. Trombe-Wand nach dem vorstehenden Anspruch,
**dadurch gekennzeichnet, dass** die eine oder die mehreren Elektroden aus zwei angrenzenden ebenen leitfähigen Lamellen (12, 13) besteht, und die auf beiden Seiten einer Isolierfolie (14) angeordnet sind.

## Claims

1. Trombe wall having a thermal storage wall (1) and a transparent cover (3) defining between them a space for air circulation and heat exchange, said space having, in its lower part, an opening (7) leading to the interior of the building and, in its upper zone, an opening (8) leading to the interior of the building,
**characterized in that** the surface of said thermal storage wall (1) facing said transparent cover (3) has at least one means for disturbing the thermal and aeraulic boundary layer, which means consists of:
- motorized transverse rollers (8, 9, 10) flush with the surface of said thermal storage wall (1), said rollers having a thickness of between 10 and 100 millimeters
or
- by protuberances having a thickness of between 10 and 100 millimeters distributed over the surface of said thermal storage wall
or
- by vibrating surfaces.

2. Trombe wall according to claim 1, **characterized in that** said thermal storage wall (1) facing said transparent cover has a plurality of laterally and vertically distributed means for disturbing the aeraulic boundary layer.

3. Trombe wall according to claim 1, **characterized in that** said means for disturbing the aeraulic boundary layer consists or consist of motorized transverse rollers (8 to 10) flush with the surface of said thermal storage wall, said rollers having a thickness corresponding to 0.2 to 2 times the thickness of said boundary layer.

4. Trombe wall according to claim 3, **characterized in that** said rollers (8 to 10) are smooth.

5. Trombe wall according to claim 4, **characterized in that** said rollers (8 to 10) have longitudinal ribs.

6. Trombe wall according to claim 1, **characterized in that** said means for disturbing the aeraulic boundary layer consists or consist of electrodes forming a dielectric barrier discharge system.

7. Trombe wall according to the preceding claim, **characterized in that** said electrode or electrodes consist of two adjacent flat conductive strips (12, 13) arranged on either side of an insulating film (14).
